Europäisches Patentamt

European Patent Office

Office européen des brevets

(11) Publication number: **0 359 332**
**A2**

## EUROPEAN PATENT APPLICATION

(21) Application number: **89202288.0**

(22) Date of filing: **09.09.89**

(51) Int. Cl.5: **A47G 1/06**

(30) Priority: **14.09.88 BE 8801054**

(43) Date of publication of application:
**21.03.90 Bulletin 90/12**

(84) Designated Contracting States:
**AT BE CH DE ES FR GB GR IT LI LU NL SE**

(71) Applicant: **LINEAIR**
**D'Aumalestraat 132**
**B-1070 Brussels(BE)**

(72) Inventor: **Van Wayenberge, Maria-Magdalena**
**Kasteelstraat 45**
**B-1710 Dilbeek(BE)**

(74) Representative: **Callewaert, Jean et al**
**Bureau Gevers S.A. rue de Livourne 7 bte 1**
**B-1050 Bruxelles(BE)**

(54) Frame part and method for manufacturing such a frame part.

(57) A method for manufacturing a frame part, which frame part is made from a synthetic material, wherein a fluorescent substance is added to the synthetic material before a frame part is manufactured from that synthetic material.

EP 0 359 332 A2

## Frame part and method for manufacturing such a frame part

The invention relates to a method for manufacturing a frame part which frame part is manufactured of a synthetic material.

Frame parts or frames made of synthetic material are generally known. They are sprayed or moulded and have a gutter shaped profile in which the object to be framed, such as for example a mirror or a portrait, can be snapped. Often a colour is mixed in the synthetic material, or the frame is painted after being manufactured. By choosing the colour of the frame, it is possible to make the frame clearly contrasting with the wall on which it is hanged, or with the object it frames.

By searching for frames having a clear, typical look and distinguishing capacity, the designers are going always further in using particular materials or in searching striking colours.

The object of the invention is to realize a method according to which a frame is manufactured which possesses a considerable distinguishing capacity by mixing the synthetic material with another material.

To this end, a method according to the invention is characterized in that a fluorescent substance is added to the synthetic material before a frame part is manufactured from that synthetic material.

The fluorescent substance gives a considerable distinguishing capacity to the frame part and, in this way, to the frame manufactured from the latter.

For the manufacturing of such frames, whether or not composed of different frame parts, use is often made of a synthetic material, such as for example PVC. The synthetic material is poured or sprayed into moulds in order to obtain the desired shape. In case of a frame part, this form is usually a gutter shaped profile, the upright walls of which are bent inwards in order to exert a clamping on the object to be framed.

In the case of a method according to the invention, a fluorescent substance is mixed in the synthetic material before manufacturing the frame or the frame part.

By mixing, each time with an appropriate fluorescent colour substance, it is possible to obtain each time a different colour such as for example yellow, pink or orange.

Since the fluorescent substance is added to the synthetic material, a good mixing is obtained between the synthetic material and the fluorescent substance and there is consequently no risk of splintering such as for example in case of frames where a colour is painted on a synthetic material. While making the mixture synthetic material - fluorescent substance, the fluorescent substance spreads out in the entire synthetic material so that, besides a good mixing, there is also obtained a uniform colour.

The use of fluorescent frames enables a clearer presentation of the framed object. The fluorescent action of the frame attracts people who see the frame and, in this way, their attention is also fixed on what is lodged into the frame.

A further advantage of a fluorescent frame consists in that it forms a spot of light in a dark room thanks to its fluorescent action. On its turn, this has favourable consequences for example for surveillance purposes by means of a T.V. camera. Due to the sharper distinguishing capacity, the frame and consequently the framed object can be identified more easily on a T.V. image by which automatic guarding becomes easier and more reliable.

## Claims

1. A method for manufacturing a frame part, which frame part is manufactured from a synthetic material, characterized in that a fluorescent substance is added to the synthetic material before a frame part is manufactured from that synthetic material.

2. A frame for framing an object, which frame is manufactured from synthetic material, characterized in that a fluorescent substance is included into the synthetic material.

3. A frame part for forming a frame as claimed in claim 2.